# FASCICULE DE BREVET EUROPEEN

(11) **EP 0 675 046 B1**
(45) Date de publication et mention de la délivrance du brevet: **20.12.2000**
(21) Numéro de dépôt: 94105157.5
(22) Date de dépôt: 31.03.1994
(51) Int. Cl.: B65D 1/00, B65D 35/24, B65D 77/08, A23L 1/225, A23L 1/24

(54) **Ensemble pour produit alimentaire comprenant un tube contenant un produit à au moins deux constituants**
Tube, ein aus mindestens zwei Bestandteilen bestehendes Nahrungsmittel enthaltend
Food product combination comprising a tube containing a product having at least two constituent parts

(43) Date de publication de la demande: 04.10.1995
(73) Titulaire: SOCIETE DES PRODUITS NESTLE S.A., 1800 Vevey (CH)
(72) Inventeur: Errass, Werner, CH-4148 Pfeffingen (CH); Diethalm, Regina, CH-4051 Basel (CH)
(74) Mandataire: Thomas, Alain

(56) Documents cités:
- EP-A- 0 243 321
- EP-A- 0 546 215
- WO-A-92/12911
- WO-A-94/26606
- CH-A- 670 612
- FR-A- 1 311 899
- FR-A- 2 248 023
- GB-A- 1 583 351
- US-A- 3 952 782

## Description

L'invention concerne un ensemble pour produit alimentaire comprenant un tube contenant un produit à au moins deux constituants différents destinés à être simultanément distribués en pressant la paroi dudit tube.

On connaît déjà des tubes contenant deux constituants. Le brevet CH-A-670'612 concerne un emballage pour de la mayonnaise et du ketchup, mais dans lequel on utilise un tube avec un adaptateur spécial pour pouvoir séparer les deux constituants. D'autre part, le brevet DE-A-1185981 concerne un procédé de remplissage de tuba classique, dans lequel on dose dans ledit tube une même masse mais colorée différemment. Le premier brevet utilise un tube spécial et le second ne concerne pas le dosage à proprement parler de constituants différents.

Un but de la présente invention est de pouvoir présenter un emballage en tube, dans lequel on utilise un tube classique, qui contient toutefois un produit à deux constituants différents.

Un autre but de la présente invention est de pouvoir distribuer à partir d'un tube classique simultanément au moins deux produits soit dans une assiette pour la consommation directe, soit dans un but de décoration, par exemple sur des canapés.

L'invention concerne un ensemble pour produit alimentaire comprenant un tube dans lequel la tube est un tube normal constitué d'un corps de tube, d'une embouchure pour la sortie du produit et d'un capuchon classique de fermeture, les constituants sont répartis autour de l'axe de symétrie du tube de manière alternée avec chaque constituant s'étendant sur toute la hauteur dudit tube, les constituants étant choisis parmi les combinaisons mayonnaise/ketchup, moutarde/ketchup, mayonnaise/moutarde, chacun des constituants moutarde ou ketchup pouvant contenir jusqu'à 40% des mayonnaise et la viscosité de la mayonnaise est comprise entre 16000 et 25000 cP et celle du ketchup et de la moutarde entre 12000 et 22000 cP.

Par tube normal, on entend un tube comme décrit ci-dessus qu'on utilise classiquement pour le conditionnement de mayonnaise, par exemple.

On pourrait également envisager la présence dans le tube de trois constituants, mais la version avec deux constituants est préférée.

Avec les deux constituants envisagés, on calcule que ceux-ci soient dosée en quantités à peu près égales (en volume) et on les dose dans le tube de manière à avoir deux zones de l'un des constituants et deux zones de l'autre. On pourrait également envisager trois zones et plus, mais la solution de deux zones est la préférée.

Il est bien entendu que les deux constituants ayant des zones de contact sur toute la hauteur du tube et devant être distribués simultanément et de manière égale, il faut qu'ils obéissent à certaines contraintes physique, par exemple, pour que les constituants soient bien distribués ensemble, il faut que le seuil d'écoulement de la mayonnaise soit compris entre 100 et 140 Pa et celui du ketchup et de la moutarde entre 60 et 120 Pa. De préférence, le seuil d'écoulement de la mayonnaise est de l'ordre de 120 Pa.

Toujours pour la même combinaison, si on veut être sûr que les produits ne se mélangent pas quand on les distribue, il faut que la viscosité de la mayonnaise soit comprise entre 16000 et 25000 cP et celle du ketchup et de la moutarde entre 12000 et 22000 cP. De préférence, pour la mayonnaise, la viscosité est comprise entre 18000 et 20000 cP. Il est bien entendu que les valeurs de seuil d'écoulement et de viscosité du ketchup et de la moutarde restent aussi valables si ces composés contiennent jusqu'à 40% d'huile. Par huile, on entend normalement un mélange de ketchup respectivement de moutarde avec de la mayonnaise.

Les mesures de ces deux grandeurs physiques sont faites avec un appareil Contraves Rheomat 108 E/R, Messystem 13.

Pour la mayonnaise, on travaille avec une teneur en huile comprise entre 40 et 80 %, de préférence une teneur en huile comprise entre 70 et 80 %.

Le produit en tube obtenu contenant les deux constituants est conservable sans réfrigération pendant une durée minimum de 6 mois.

Pour des raisons de viscosité, il est nécessaire que la phase aqueuse, à savoir la phase ketchup et moutarde contienne entre 2 et 8 % d'épaississant, cet épaississant étant de préférence de l'amidon modifié. Le pH des deux constituants est acide, compris entre 3,4 et 4.

Pour le remplissage du tube, on utilise une buse spéciale. Avant le remplissage, il faut pasteuriser le ketchup et la moutarde pour permettre la durée de conservation souhaitée. Concernant la mayonnaise, elle est préparée de manière classique et ne nécessite aucun traitement thermique. Le remplissage dans le tube se fait sur un dispositif aseptique ou hautement hygiénique.

La suite de la description est faite en référence aux dessins ,sur lesquels
Fig. 1 est une représentation schématique de l'emballage selon l'invention et
Fig. 2 est une coupe selon la ligne 2-2 de la Fig. 1.

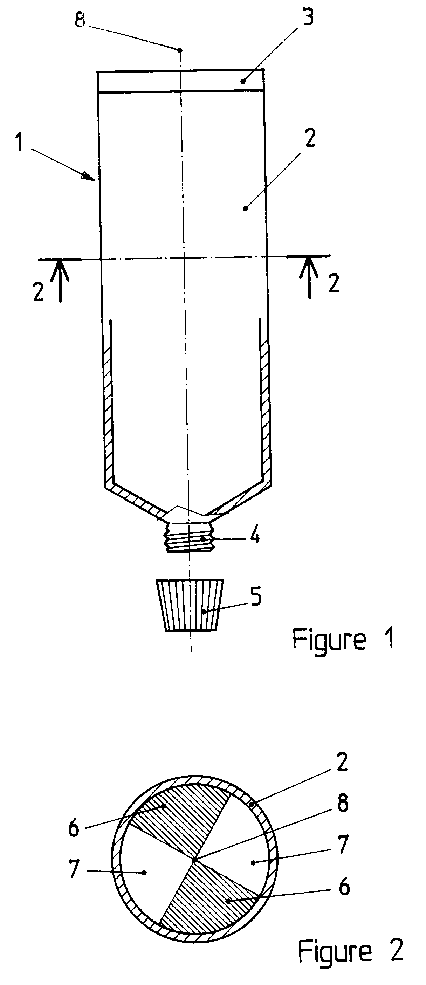

Le tube (1) comprend un fond de tube scellé (3), un corps de tube (2), une embouchure (4) pour la sortie des deux constituants et un bouchon (5) pour fermer le tube. La combinaison des deux constituants est dans le tube, comme on le voit plus précisément sur la Fig. 2 : on a le ketchup (6) et la mayonnaise (7) répartis autour de l'axe de symétrie (8) du tube (1). Ces constituants sont répartis en deux zones distinctes.

Lorsqu'on utilise le tube, on le presse et les deux constituants sortent simultanément et en quantités égales : aucun mélange des deux constituants n'est visible, même après une conservation de 6 mois sans réfrigération.

On dispose selon l'invention d'un tube combinant deux constituants différents qui ne se mélangent pas, même après de multiples pressions sur ledit tube, permettant ainsi jusqu'au vidage complet du tube de doser régulièrement les deux constituants.

La suite de la description est faite en référence aux exemples.

### Exemple 1.

On prépare une phase aqueuse de ketchup ayant un seuil d'écoulement de 90 Pa et une viscosité de 18000 cP et la composition suivante :

| | |
|---|---|
| Concentré de tomates | 17% |
| Vinaigre | 26% |
| Sucre | 25,2% |
| Eau | 24% |
| Sel | 2% |
| Epaississant | 5,7% |
| Epices | o,1% |

On pasteurise ce ketchup à 75 °C pendant 10 min.

On prépare également une mayonnaise de manière classique :celle-ci a un seuil d'écoulement de 118 Pa et une viscosité de 18500 cP et la composition suivante

| | |
|---|---|
| Huile de tournesol | 80% |
| jaune d'oeuf | 6% |
| Vinaigre | 10% |
| Epices | 1% |
| sel | 1% |
| eau | 2% |

Ces deux constituants sont amenés sur un système hautement hygiénique vers une buse de dosage qui remplit un tube normal à raison de 200 g par constituant. On obtient un tube ayant une bonne simultanéité de dosage des deux constituants, sans aucun mélange desdits constituants.

### Exemple 2.

On reprend la composition de ketchup de l'exemple précédent qu'on pasteurise comme précédemment.

On prépare d'autre part, une phase grasse contenant
15 % de mayonnaise (selon l'exemple 1)
2,7 % d'épaississant et
82,3 % de moutarde douce.

On améne ces deux constituants dans un système de remplissage hygiénique et on remplit les tubes avec une buse spéciale.

On obtient dans ce cas également un système à deux constituants, qui restent bien séparés même après 6 mois de stockage.

L'emballage selon l'invention permet donc de mettre à disposition du consommateur un produit de longue conservation obtenu par des méthodes classiques,en respectant seulement certains paramètres physiques, chimiques ou physico-chimiques permettant de rendre possible la co-habitation dans un tube classique de constituants différents.

## Revendications

1. Ensemble pour produit alimentaire comprenant un tube contenant un produit à au moins deux constituants différents, destinés à être simultanément distribués en pressant la paroi dudit tube, caractérisé en ce que le tube est un tube normal constitué d'un corps de tube, d'une embouchure pour la sortie du produit et d'un capuchon classique de fermeture, en ce que les constituants sont répartis autour de l'axe de symétrie du tube de manière alternée avec chaque constituant s'étendant sur toute la hauteur dudit tube, les constituants étant choisie parmi les combinaisons mayonnaise/ketchup, moutarde/ketchup, mayonnaise/moutarde, chacun des constituants moutarde ou ketchup pouvant contenir jusqu'à 40% de mayonnaise et en ce que la viscosité de la mayonnaise est comprise entre 16000 et 25000 cP et celle du ketchup et de la moutarde entre 12000 et 22000 cP.

2. Ensemble selon la revendication 1, caractérisé en ce que les deux constituants sont en quantités à peu près égales.

3. Ensemble selon l'une des revendications 1 ou 2, caractérisé en ce que chaque constituant est présent sur deux zones, trots zones et plus.

4. Ensemble selon l'une des revendications 1 à 3, caractérisé en ce que le seuil d'écoulement de la mayonnaise est compris entre 100 et 140 Pa et celui du ketchup et de la moutarde entre 60 et 120 Pa.

5. Ensemble selon l'une des revendications 1 à 4, caractérisé en ce que la teneur en huile de la mayonnaise est comprise entre 70 et 80%.

6. Ensemble selon l'une des revendications 1 à 5, caractérisé en ce que le ketchup et la moutarde contiennent entre 2 et 8% d'épaississant.

7. Ensemble selon l'une des revendications 1 à 6, caractérisé en ce que l'épaississant est de l'amidon modifié.

8. Ensemble selon l'une des revendications 1 à 7, caractérisé en ce que la mayonnaise, le ketchup et la moutarde ont un pH compris entre 3,4 et 4.

## Claims

1. Assembly for a food product comprising a tube containing a product having at least two different constituents, designed to be distributed simultaneously by pressing the wall of the said tube, characterized in that the tube is a normal tube consisting of a tube body, an outlet for the product and a conventional closing cap, in that the constituents are distributed around the axis of symmetry of the tube in an alternate manner with each constituent extending over all the height of the said tube, the constituents being chosen from the combinations mayonnaise/ketchup, mustard/ketchup, mayonnaise/mustard, it being possible for each of the mustard or ketchup constituents to contain up to 40 % mayonnaise, and in that the viscosity of the mayonnaise is comprised between 16000 and 25000 cP and that of the ketchup and mustard between 12000 and 22000 cP.

2. Assembly according to claim 1, characterized in that the two constituents are in almost equal quantities.

3. Assembly according to either of claims 1 or 2, characterized in that each constituent is present in two, three or more zones.

4. Assembly according to one of claims 1 to 3, characterized in that the flow threshold of the mayonnaise is comprised between 100 and 140 Pa and that of the ketchup and mustard between 60 and 120 Pa.

5. Assembly according to one of claims 1 to 4, characterized in that the oil content of the mayonnaise is comprised between 70 and 80 %.

6. Assembly according to one of claims 1 to 5, characterized in that the ketchup and mustard contain between 6 and 8 % of a thickener.

7. Assembly according to one of claims 1 to 6, characterized in that the thickener is a modified starch.

8. Assembly according to one of claims 1 to 7, characterized in that the mayonnaise, the ketchup and the mustard have a pH comprised between 3.4 and 4.

## Patentansprüche

1. Anordnung für ein Nahrungsmittel, die eine Tube umfaßt, die ein Produkt aus wenigstens zwei unterschiedlichen Bestandteilen enthält, die dazu bestimmt sind, gleichzeitig unter Druckausübung auf die Tubenwand ausgetragen zu werden, dadurch gekennzeichnet, daß die Tube eine normale Tube ist, die aus einem Tubengehäuse, einer Öffnung für die Produktabgabe und aus einer klassischen Verschlußkappe besteht, wobei die Bestandteile alternierend um die Symmetrieachse der Tube herum verteilt sind, wobei sich jeder Bestandteil über die gesamte Höhe der Tube erstreckt, wobei die Bestandteile ausgewählt sind aus den Kombinationen Mayonnaise/Ketchup, Senf/Ketchup, Mayonnaise/Senf, wobei jeder der Bestandteile Senf oder Ketchup bis zu 40% Mayonnaise enthalten kann, und wobei die Viskosität der Mayonnaise zwischen 16000 und 25000 cP liegt und die von Ketchup und von Senf zwischen 12000 und 22000 cP liegt.

2. Anordnung nach Anspruch 1, dadurch gekennzeichnet, daß die beiden Bestandteile in ungefähr gleichen Mengen vorliegen.

3. Anordnung nach einem der Ansprüche 1 oder 2, dadurch gekennzeichnet, daß jeder Bestandteil in zwei Zonen, drei Zonen und mehr vorliegt.

4. Anordnung nach einem der Ansprüche 1 bis 3, dadurch gekennzeichnet, daß die Fließgrenze der Mayonnaise zwischen 100 und 140 Pa liegt und die von Ketchup und von Senf zwischen 60 und 120 Pa liegt.

5. Anordnung nach einem der Ansprüche 1 bis 4, dadurch gekennzeichnet, daß der Ölgehalt der Mayonnaise zwischen 70 und 80% liegt.

6. Anordnung nach einem der Ansprüche 1 bis 5, dadurch gekennzeichnet, daß der Ketchup und der Senf zwischen 2 und 8% Verdickungsmittel enthalten.

7. Anordnung nach einem der Ansprüche 1 bis 6, dadurch gekennzeichnet, daß das Verdickungsmittel modifizierte Stärke ist.

8. Anordnung nach einem der Ansprüche 1 bis 7, dadurch gekennzeichnet, daß die Mayonnaise, der Ketchup und der Senf einen pH-Wert aufweisen, der zwischen 3,4 und 4 liegt.
